# FASCICULE DE BREVET EUROPEEN

(11) **EP 0 576 322 B1**
(45) Date de publication et mention de la délivrance du brevet: **18.09.1996**
(21) Numéro de dépôt: 93401489.5
(22) Date de dépôt: 10.06.1993
(51) Int. Cl.: G01B 7/00, G01B 7/28, G01N 27/72

(54) **Procédé de contrôle non destructif d'une soudure**
Verfahren zur zerstörungsfreien Prüfung einer Lötstelle
Procedure for non-destructive testing of a soldered joint

(30) Priorité: 26.06.1992 FR 9207920
(43) Date de publication de la demande: 29.12.1993
(73) Titulaire: AEROSPATIALE Société Nationale Industrielle, F-75781 Paris Cédex 16 (FR)
(72) Inventeur: Galerne, Catherine, F-92320 Chatillon (FR); Breugnot, Jean-Pierre, F-92120 Montrouge (FR)
(74) Mandataire: Bonnetat, Christian

(56) Documents cités:
- US-A- 3 588 683
- US-A- 4 303 883
- DATABASE WPIL Week 8126, Derwent Publications Ltd., London, GB; AN 81-F9875D ; & SU-A-761 899
- DATABASE WPIL Week 8327, Derwent Publications Ltd., London, GB; AN 83-704913 ; & JP-A-954 866
- SOVIET JOURNAL OF NONDESTRUCTIVE TESTING vol. 25, no. 5, Mai 1989, New York, US, pp. 349-356; A.V. VINOGRADOV et al.: "Inspecting the thickness of protective coatings utilising the Barkhausen effect"
- DATABASE WPIL Week 8525, Derwent Publications Ltd., London, GB; AN 85-144829 ; & SU-A-1 123 803

## Description

La présente invention concerne un procédé de contrôle non destructif d'une soudure.

La technique du soudage est couramment utilisée pour réaliser la jonction de nombreux éléments et notamment dans de nombreux domaines d'application dans lesquels la qualité et la fiabilité de la liaison doivent être assurées avec les plus grandes garanties possibles.

Parmi les paramètres qui doivent être pris en compte pour le contrôle de la qualité d'une soudure, on distingue ceux relatifs à la structure métallurgique de la soudure et des matériaux soudés, tels que notamment la structure microcristalline, et ceux relatifs à la géométrie et aux dimensions du cordon de soudure.

Ces paramètres géométriques et dimensionnels doivent notamment être maîtrisés avec la plus grande précision possible dans le cas d'une opération de soudage par faisceau laser ou par bombardement électronique qui permet d'obtenir un cordon de soudure de très faible largeur transversale. En effet, un décalage transversal, même très faible, d'un cordon de soudure étroit par rapport au plan de joint théorique de soudage entre les deux pièces se traduit par une liaison nettement insuffisante entre les deux pièces, ce qui entraîne un risque de rupture prématurée de la liaison. De même, il est souhaitable de pouvoir vérifier par un contrôle non destructif que la profondeur de pénétration du cordon de soudure est sensiblement constante le long de la soudure.

Différents procédés de contrôle non destructifs ont déjà été proposés pour procéder au contrôle des liaisons par soudure.

Par le brevet américain US-A-3 341 771, on connaît déjà un procédé de contrôle non destructif de la qualité d'une soudure consistant à magnétiser les matériaux à contrôler dont la surface porte un support d'information magnétique, à enlever ensuite ce support magnétique qui a enregistré un magnétogramme, c'est-à-dire l'information sur l'état qualitatif du matériau à contrôler, à mettre le support magnétique dans un lecteur de magnétogramme dans lequel un capteur est disposé tout près de la surface du support d'information magnétique, et à déplacer ces derniers l'un par rapport à l'autre. L'information est captée et ensuite transformée en signaux électriques d'après lesquels on peut juger de l'état qualitatif du matériau à contrôler.

Ce procédé et le dispositif pour sa mise en oeuvre ne permettent que d'établir la présence d'un défaut dans le matériau à contrôler sans fournir toutefois ses caractéristiques spatiales (profondeur de site, configuration, étendue, disposition relative). De plus, l'outillage nécessaire à la mise en oeuvre de ce procédé non destructif est particulièrement volumineux.

Par le brevet américain US-A-4 303 883, on connaît également un appareil pour détecter la position du centre d'un cordon de soudure. L'appareil magnétise le métal de base au moyen d'un flux alternatif pour traverser le cordon de soudure du métal de base et la fuite du flux magnétique résultant du cordon de soudure est détectée à l'aide d'au moins un détecteur qui délivre un signal alternatif.

L'harmonique fondamentale du signal de magnétisation utilisé est éliminée du signal alternatif et la tension du signal résultant est échantillonnée selon une période fixe correspondant à la période de magnétisation, la position du centre du cordon de soudure étant déterminée à partir des résultats de l'échantillonnage. Cet appareil est d'une structure relativement complexe dans la mesure où il nécessite de disposer d'au moins un enroulement de magnétisation et d'au moins un élément détecteur de flux, qui doivent être positionnés l'un par rapport à l'autre et intégrés dans un ensemble dont la configuration permette le contrôle effectif d'un cordon de soudure. De plus, un appareil de ce type ne permet pas d'obtenir directement une représentation simple de la position du cordon de soudure, ni bien entendu aucune donnée relative à la profondeur de pénétration du cordon de soudure.

Par ailleurs, le brevet américain US-A-3 588 683 décrit un procédé de contrôle non destructif d'un cordon de soudure au moyen d'une sonde appartenant à une instrumentation mettant en oeuvre l'effet Barkhausen (méthode magnétoélastique), ledit procédé visant à déterminer certains paramètres géométriques et/ou dimensionnels dudit cordon de soudure, tels notamment que la position du cordon de soudure par rapport au plan de joint théorique de soudage ou la constance de la profondeur de pénétration du cordon de soudure.

Dans ce dernier document, pour pouvoir mettre en oeuvre ledit procédé, on utilise une sonde multiple spéciale, comportant une pluralité de détecteurs disposés transversalement audit cordon de soudure. Une telle sonde, bien que devant être réalisée spécialement, n'est pas capable d'indiquer avec précision les paramètres que l'on cherche à déterminer.

La présente invention a pour objet de remédier aux inconvénients des procédés et dispositifs qui viennent d'être mentionnés.

A cette fin, selon l'invention, le procédé de contrôle non destructif, du type rappelé ci-dessus mettant en oeuvre l'effet Barkhausen, est caractérisé en ce qu'on fait effectuer à ladite sonde un balayage transversal d'au moins une portion dudit cordon de soudure, la course de balayage s'étendant successivement le long d'une portion de métal de base, de la première zone affectée thermiquement, de la zone de fusion, de la seconde zone affectée thermiquement, puis d'une portion de métal de base, en ce qu'on détermine les deux valeurs maximales consécutives du niveau de bruit Barkhausen correspondant sensiblement aux deux zones affectées thermiquement, puis en ce qu'on détermine la valeur minimale par laquelle passe le niveau de bruit entre ces deux valeurs maximales, cette valeur minimale correspondant sensiblement au positionnement de la sonde au droit de l'axe médian du cordon de soudure.

Ainsi, grâce à la présente invention, on peut utiliser une sonde usuelle à un seul détecteur, de sorte que le dispositif utilisé est très simple et peu encombrant et qu'il permet d'obtenir des représentations visuelles précises, pouvant ultérieurement être traitées numériquement, des paramètres géométriques et dimensionnels du cordon de soudure. Il permet notamment de déterminer la position exacte de l'axe médian du cordon de soudure. En effet, en mettant en oeuvre la présente invention, une simple opération de balayage transversal, suivie par exemple de la lecture de la courbe illustrant le niveau du bruit Barkhausen en fonction de la position transversale de la sonde, permet de déterminer le décalage ou déport transversal de l'axe médian du cordon de soudure par rapport au plan de joint théorique de soudage.

Il est bien entendu possible de répéter plusieurs fois l'opération de balayage transversal pour différentes positions le long du cordon de soudure, afin de contrôler l'alignement correct de l'axe médian du cordon de soudure avec le plan de joint théorique de soudage tout au long de la soudure.

Selon un autre aspect de l'invention, le procédé consiste à effectuer au moins un balayage longitudinal du cordon de soudure parallèlement à l'axe médian de celui-ci.

Afin de contrôler que la profondeur de pénétration du cordon de soudure est constante le long de la soudure, on peut effectuer le balayage longitudinal sensiblement au droit du plan de joint théorique de soudage, puis déduire de l'analyse des variations du bruit Barkhausen une variation de la profondeur de pénétration du cordon de soudure, la valeur du niveau de bruit Barkhausen variant sensiblement en fonction de la variation de la profondeur de pénétration.

Ainsi, l'invention permet très rapidement de visualiser une variation de la profondeur de pénétration du cordon de soudure par simple lecture de la courbe illustrant le niveau de bruit Barkhausen en fonction de la course transversale de la sonde de détection, une réduction progressive de la profondeur de pénétration étant par exemple illustrée par une inclinaison de la droite correspondant à la valeur moyenne du bruit Barkhausen enregistré.

Selon un autre aspect du procédé conforme à l'invention, on effectue successivement une série de balayages longitudinaux selon des lignes parallèles au plan de joint théorique du soudage, on calcule la valeur moyenne du niveau de bruit Barkhausen enregistré au cours de chacun des balayages, on détermine les deux valeurs maximales de ces moyennes et la valeur minimale de la moyenne correspondant à une ligne de balayage située entre les deux lignes auxquelles correspondent les deux valeurs maximales, la ligne associée à cette valeur minimale correspondant sensiblement à l'axe médian du cordon de soudure.

Les figures du dessin annexé feront bien comprendre comment l'invention peut être réalisée. Sur ces figures, des références identiques désignent des éléments semblables.

La figure 1 illustre schématiquement en section transversale la jonction de deux pièces par un cordon de soudure positionné correctement par rapport au plan de joint théorique de soudage.

La figure 2 est une vue similaire à celle de la figure 1 qui illustre un déport transversal du cordon de soudure par rapport au plan de joint théorique de soudage.

La figure 3 illustre schématiquement une installation nécessaire à la mise en oeuvre du procédé de contrôle non destructif selon l'invention.

La figure 4 est un graphique dont la courbe correspond au niveau du bruit Barkhausen en fonction de la course de balayage du détecteur lors d'un balayage transversal d'un cordon de soudure correctement aligné.

La figure 5 est un graphique dont la courbe représente la valeur du bruit Barkhausen en fonction de la course longitudinale de balayage d'un cordon de soudure dont la profondeur de pénétration est sensiblement constante.

La figure 6 est un graphique dont les trois courbes illustrent les résultats de trois opérations successives de balayage transversal du cordon de soudure précédemment 5 balayé longitudinalement pour l'établissement de la courbe de la figure 5 et qui illustrent le décalage transversal du cordon de soudure par rapport au plan de joint théorique de soudage.

Les figures 7 et 8 sont des courbes qui illustrent la variation du niveau de bruit Barkhausen lors de l'inspection par balayage longitudinal d'un cordon de soudure dont la profondeur de pénétration n'est pas constante.

Les figures 9A à 9J illustrent les courbes d'enregistrement du niveau de bruit Barkhausen obtenu lors d'une succession de balayages longitudinaux d'une liaison selon des lignes parallèles régulièrement espacées par rapport au plan de joint théorique de soudage.

La méthode Barkhausen, ou méthode magnétoélastique, se fonde sur un concept découvert en 1919 par le Professeur Barkhausen.

Les matériaux magnétoélastiques sont constitués de petites zones magnétiques semblables à de minuscules aimants que l'on appelle des domaines. Chaque domaine est magnétisé selon une certaine direction naturelle cristallographique de magnétisation. Les domaines sont séparés les uns des autres par des frontières appelées parois de domaine ou parois de Bloch. Les champs magnétiques appliqués provoquent le déplacement aller et retour des parois de domaines. Pour permettre le déplacement d'une paroi, le domaine d'un côté de la paroi doit augmenter sa dimension, tandis que le domaine sur le côté opposé doit diminuer sa dimension. Il en résulte un changement global de la magnétisation dans l'échantillon considéré. Si l'on place une bobine d'induction auprès de l'échantillon lorsque les parois de domaines se déplacent, le changement de magnétisation qui en résulte induit une impulsion électrique dans la bobine.

Le professeur Barkhausen a démontré que le domaine de magnétisation qui est caractérisé par une courbe d'hystérésis, n'est pas en fait continu, mais se produit sous la forme d'une suite d'impulsions courtes et brutales qui sont causées par le mouvement des parois de domaines sous un champ magnétique appliqué. Lorsque l'impulsion électrique produite par tous les mouvements des domaines sont additionnées, un signal de type "bruit", appelé "bruit Barkhausen", est engendré. Le bruit Barkhausen a un spectre de puissance s'étendant de la fréquence de magnétisation jusqu'à 250 kHz dans la plupart des matériaux. Il est amorti de manière exponentielle en fonction de la distance dont il a à pénétrer dans le matériau. Cet amortissement détermine la profondeur de mesure.

Les principaux facteurs qui déterminent cette profondeur sont la gamme de fréquence de signal du bruit analysé, la conductivité et la perméabilité du matériau testé. De manière pratique, la profondeur varie de 0,01 à 2 mm.

Deux caractéristiques importantes des matériaux affectent l'intensité du bruit Barkhausen :
- la première est la présence et la distribution de contraintes élastiques qui vont influencer la façon dont les domaines vont choisir leur direction de magnétisation et s'y verrouiller. Il résulte de l'interaction magnétoélastique dans les matériaux avec une anisotropie magnétique positive (le fer, la plupart des aciers, le cobalt) que les contraintes de compression vont diminuer l'intensité du bruit Barkhausen, tandis que les contraintes de tension l'augmenteront ;
- la seconde caractéristique importante est la structure métallurgique microcristalline du matériau. On peut en fait décrire ce phénomène en terme de duretés. Le niveau de bruit décroît dans les microstructures caractérisées par une croissance de duretés et inversement. L'effet Barkhausen se prête donc au contrôle non destructif des matériaux et les principales applications connues à ce jour sont la recherche de défauts de surface, la détection de brûlures de rectification, de points d'adoucissement, d'effets de bord en traitement thermique, de zones décarburées, de la granulométrie, du sens du fibrage, ainsi que la mesure de la teneur en carbone.

Pour connaître de manière approfondie la théorie de l'effet Barkhausen et ses applications connues aux contrôles non destructifs, on pourra par exemple se reporter au document NTIAC-79-2 (MATZKANIN, BEISSNER, TELLER) publié en octobre 1979 par le Southwest Research Institute, San Antonio, Texas.

D'une manière surprenante, les applications de l'effet Barkhausen dans les procédés de contrôle non destructifs de soudures avaient jusqu'à présent été limitées à la détermination de la valeur des contraintes résiduelles ou de changements de structure cristallographique dans les soudures.

On pourra par exemple se reporter au document "Magnetoelastic Barkhausen Noise Method for Testing of Residual Stresses" de Tiitto, American Stress Technologies, Inc.

L'invention permet la mise en oeuvre originale de la méthode magnétoélastique pour la détermination de paramètres géométriques et dimensionnels des soudures.

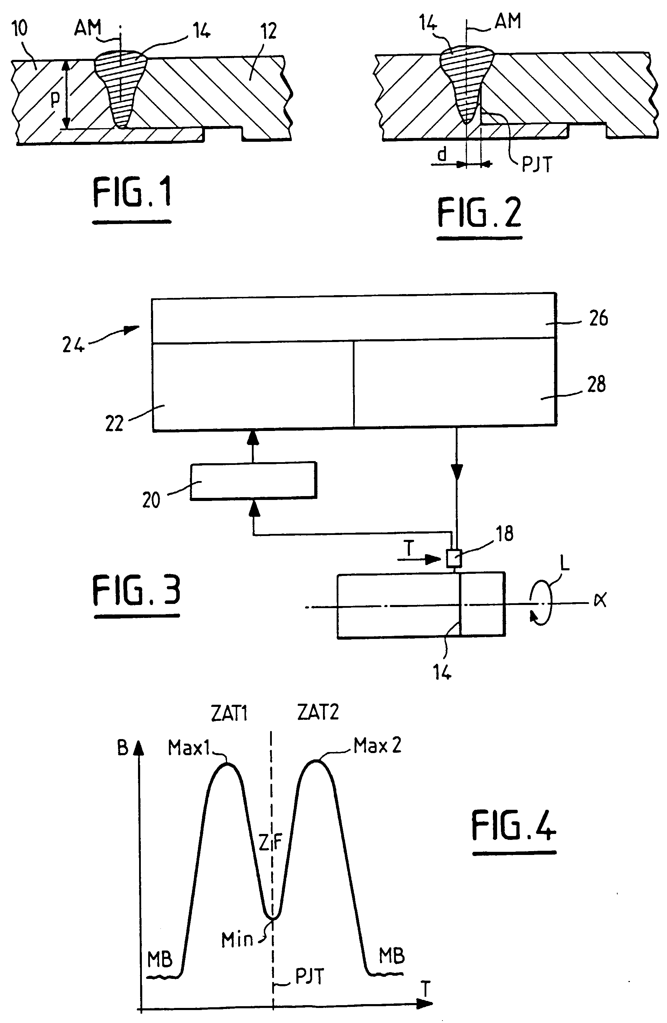

On a illustré, sur les figures 1 et 2, une jonction de deux panneaux 10 et 12 sensiblement coplanaires qui sont en appui transversalement l'un contre l'autre par deux faces planes longitudinales opposées qui déterminent un plan de joint théorique de soudage PJT (voir figure 2).

Selon une technique connue, la jonction est réalisée par soudage, par laser.

Lorsque l'opération de soudage est correctement réalisée comme cela est illustré sur la figure 1, on obtient un cordon de soudure 14 dont l'axe médian AM est confondu avec le plan de joint théorique PJT et dont la profondeur de pénétration p, qui correspond à la profondeur souhaitée pour assurer une bonne liaison des deux panneaux 10 et 12, doit être constante tout le long de la soudure.

Dans l'exemple illustré sur la figure 2, la soudure 14 n'a pas été correctement réalisée et il existe un décalage ou déport transversal d entre l'axe médian AM et le plan de joint théorique PJT. A titre d'exemple, un déport transversal de 0,3 mm entraîne un défaut de liaison à partir du talon sensiblement égal à 50 % de l'épaisseur à souder, d'où il résulte un risque important de rupture prématurée de la liaison.

Il est donc primordial de pouvoir contrôler la position correcte du cordon de soudure 14 par rapport au plan de joint théorique PJT et ceci notamment dans le cas des soudures laser qui sont très fines, la largeur du cordon de soudage en surface étant par exemple égale à 1 mm.

Le schéma de la figure 3 représente une sonde, ou détecteur, 18 qui est reliée à une instrumentation magnétoélastique 20 qui délivre des signaux représentatifs du bruit Barkhausen qui sont traités dans la partie 22 d'une unité électronique d'analyse et de traitement 24 qui, au moyen par exemple d'un ordinateur 26, pilote également un module 28 de gestion des déplacements selon trois axes orthogonaux de la sonde 18 et/ou du déplacement de la pièce sur laquelle est formé le cordon de soudure à contrôler 14.

L'instrumentation 20 est par exemple un appareil "Rollscan 200-1-H" associé avec une sonde "S1-163" commercialisés par la firme American Stress Technologies, Inc.

Dans l'exemple illustré sur la figure 3, la pièce à contrôler est une pièce cylindrique qui peut être entraînée en rotation autour de son axe d'un angle α.

Sur la courbe de la figure 4, on voit que le niveau du bruit Barkhausen B varie, lors du balayage transversal T d'un cordon de soudure, depuis une valeur inférieure correspondant au métal de base MB, puis croît rapidement jusqu'à un premier maximum Maxl correspondant à une première zone affectée thermiquement par la soudure ZAT1, puis décroît rapidement jusqu'à un minimum Min correspondant à l'axe médian de la zone de fusion ZF du cordon de soudure, puis croît à nouveau jusqu'à un second maximum Max2 correspondant à la seconde zone affectée thermiquement ZAT2, puis redécroît enfin jusqu'à la valeur inférieure correspondant au matériau de base MB.

Si la soudure a été correctement effectuée, le minimum est aligné sur la position du plan de joint théorique de soudage PJT.

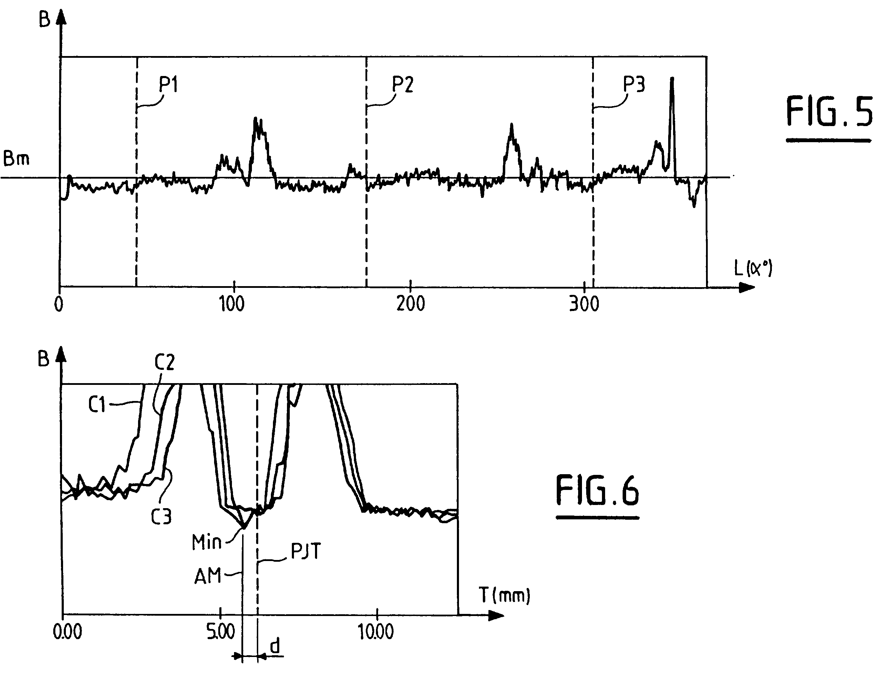

On décrira maintenant un premier exemple de mise en oeuvre du procédé selon l'invention, en référence aux figures 5 et 6.

Les courbes des figures 5 et 6 résultent d'un essai effectué sur une éprouvette circulaire d'épaisseur égale à 1,7 mm en EZ2 NKD 18 soudée par faisceau d'électrons sur laquelle on a réalisé un cordon de soudure de profondeur de pénétration sensiblement constante, mais décalé transversalement de 0,5 mm par rapport au plan de joint théorique de soudage.

La courbe de la figure 5 montre que la valeur moyenne Bm du bruit Barkhausen B est sensiblement constante sur toute la course de balayage longitudinale L du cordon 14 de l'éprouvette, obtenue en entraînant cette dernière en rotation autour de son axe sur une course angulaire de 360.

Les lignes en pointillés P1, P2 et P3 illustrent les trois positions longitudinales pour lesquelles ont été effectuées trois opérations de balayage transversal du cordon de soudage dont les résultats sont illustrés sur la figure 6 sous la forme de trois courbes d'enregistrement du bruit Barkhausen C1, C2, C3.

On a également fait figurer sur la figure 6 la position du plan de joint théorique de soudage PJT par rapport à la course transversale T de balayage du cordon de soudure.

Comme on peut le constater, la position du minimum Min correspondant sensiblement à l'axe médian du cordon de soudure, mesurée pour les trois points P1, P2 et P3, est décalée d'une distance transversale d par rapport au plan PJT.

La mise en oeuvre de la méthode Barkhausen dans le procédé de contrôle non destructif selon l'invention permet ainsi de visualiser et de mesurer de manière très simple le décalage d par simple tracé d'une courbe illustrant ou représentant le niveau du bruit Barkhausen en fonction de la course de balayage. Dans l'exemple illustré, le décalage est égal à 0,4 mm pour un décalage réel de 0,5 mm.

Il est bien entendu possible de prévoir une analyse et un traitement numérique automatisé du bruit Barkhausen afin d'obtenir directement le calcul de la valeur du décalage d.

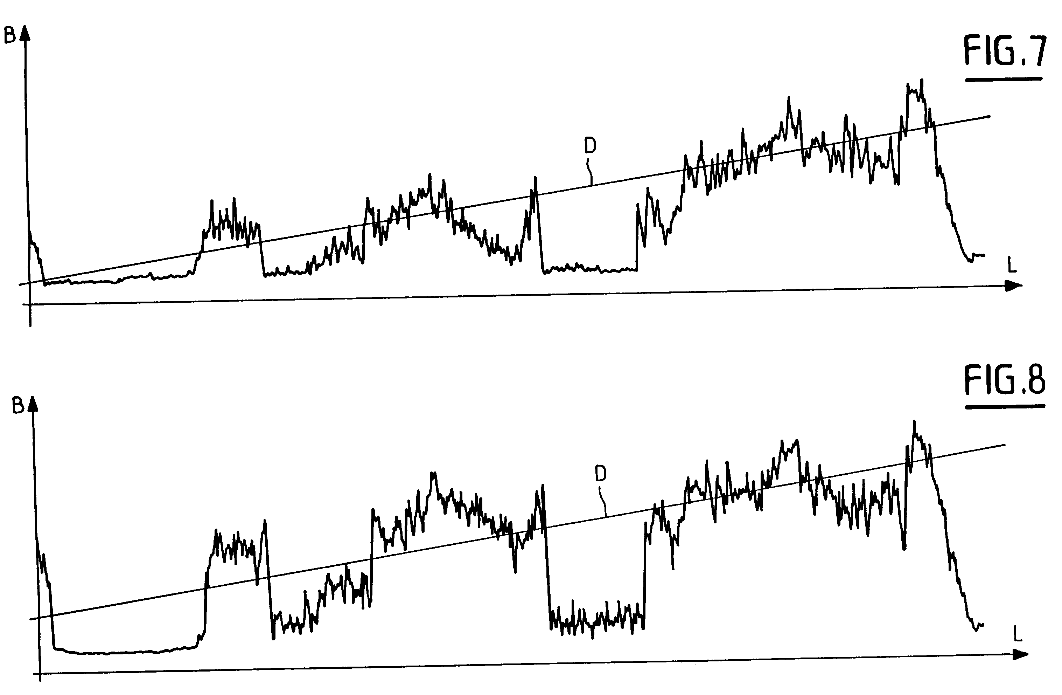

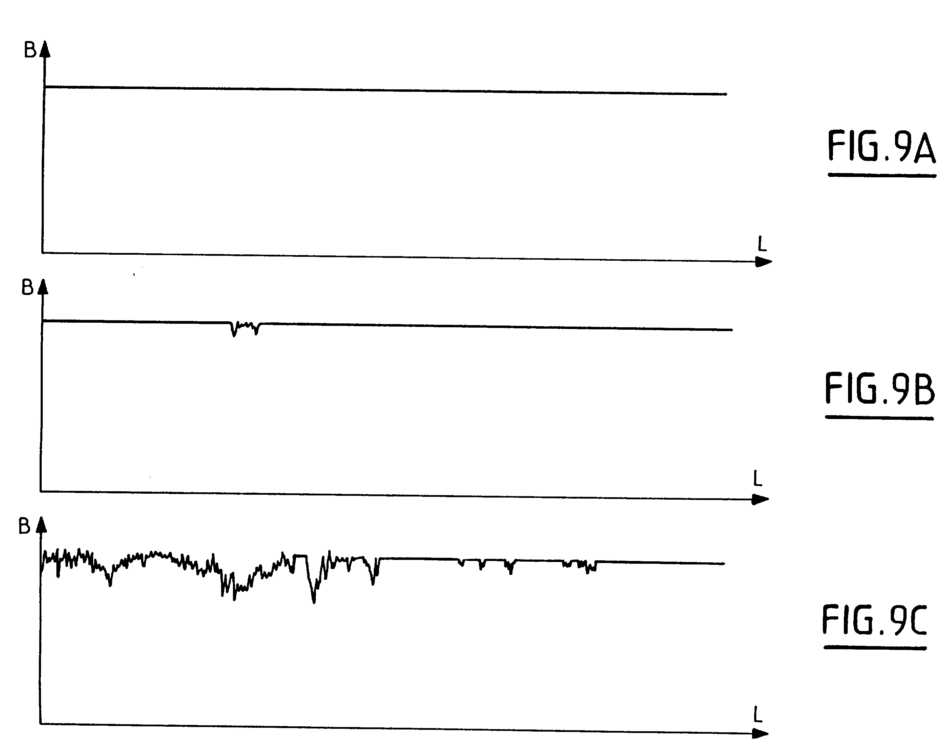

On décrira maintenant un exemple du contrôle de la constance de la profondeur de pénétration du cordon de soudure en référence aux figures 7 et 8.

Dans ce but, un essai a été effectué sur une éprouvette cylindrique d'une épaisseur de 2 mm en EZ2 NKD 18 traitée 1720 MPa et sur laquelle a été réalisée une ligne de fusion, sans plan de joint, par soudage laser avec une intensité affichée de 47 mA avec un laser CO₂ de 2 kW, et de focale égale à 127 mm.

Par suite d'une défectuosité imprévue du laser consistant en une déformation de la lentille due à un mauvais refroidissement, la pénétration du cordon de soudure a été décroissante sur toute la longueur du cordon. Toutefois, visuellement et en surface, la largeur du cordon est constante, bien qu'il existe une décroissance progressive de la zone de fusion et de la zone affectée thermiquement.

La figure 7 illustre la valeur du bruit Barkhausen enregistrée à la suite d'un balayage longitudinal le long de la ligne de fusion à environ à 1,5 mm du milieu de la zone fusionnée. On constate une variation progressive du niveau moyen du bruit Barkhausen le long de la ligne de fusion, ce qui peut être illustré par l'inclinaison de la droite D illustrant la valeur moyenne du bruit Barkhausen.

On obtient ainsi directement par une simple visualisation du niveau de bruit le long du cordon de soudure, l'indication d'une variation de la profondeur de pénétration.

La figure 8 est une courbe qui illustre le même enregistrement que sur la figure 7, effectué symétriquement de l'autre côté de la zone de fusion et à la même distance.

Les figures 7 et 8 sont des illustrations sous la forme de courbe résultant d'une analyse numérique des signaux du bruit Barkhausen, mais il est également possible de réaliser une représentation analogique par une cartographie colorée des niveaux du bruit Barkhausen.

On décrira maintenant un exemple de mise en oeuvre du procédé selon l'invention permettant de déterminer notamment la distance d'essai par rapport au plan de joint théorique.

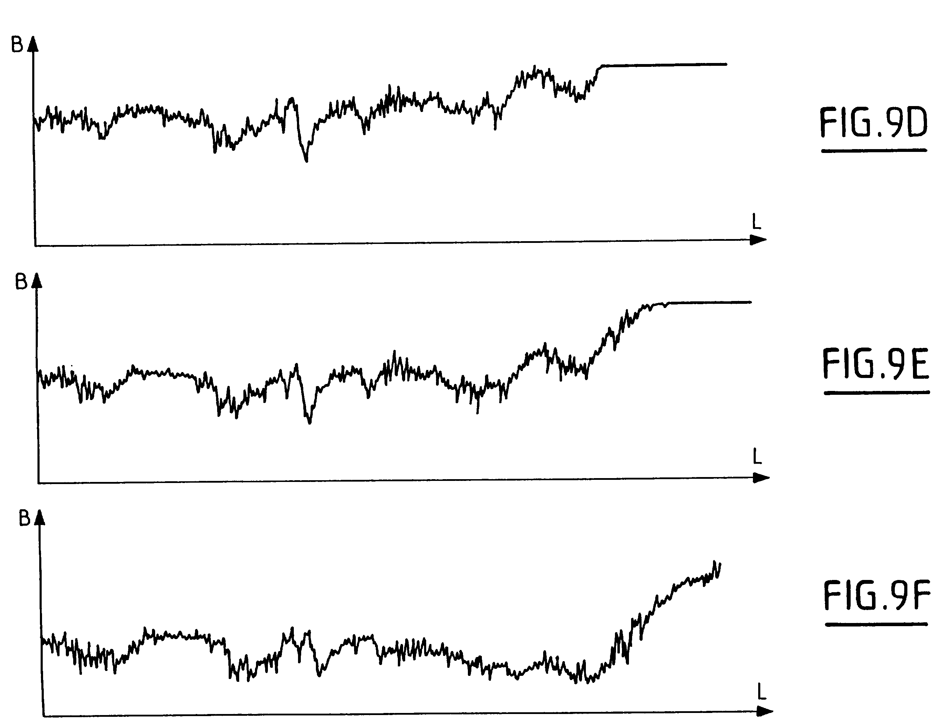

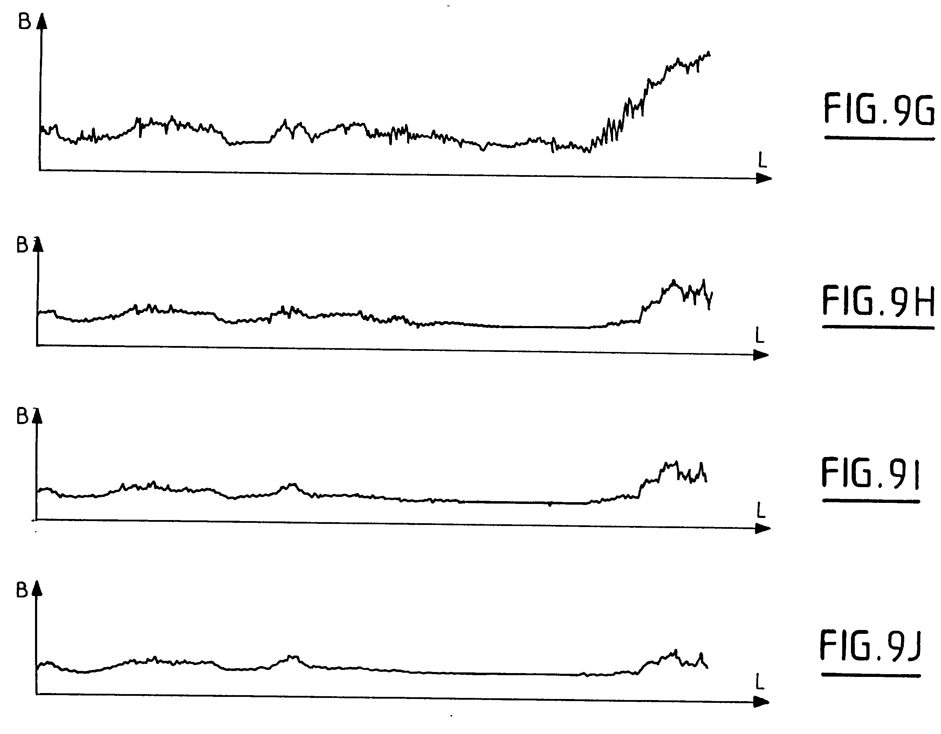

Les courbes illustrées sur les figures 9A à 9J correspondent à des enregistrements du niveau de bruit Barkhausen par des balayages longitudinaux successifs selon des lignes de balayage parallèles équidistantes transversalement de 0,2 mm.

La figure 9A correspond à un balayage effectué à 0,8 mm du plan de joint théorique tandis que la figure 9J correspond ainsi à un balayage effectué à 2,6 mm du plan de joint théorique d'un même côté du plan de joint.

On constate que la valeur moyenne du niveau de bruit Barkhausen passe par un maximum sur la figure 9C, puis diminue progressivement au fur et à mesure que l'on s'éloigne du plan de joint théorique pour atteindre une valeur minimum sensiblement constante correspondant aux figures 9I et 9J.

Dans les opérations de contrôle non destructif par balayage longitudinal du cordon de soudage, il est donc très important que la sonde soit positionnée correctement par rapport au plan de joint théorique.

Il est également possible de déterminer la position de l'axe médian du cordon de soudure à l'aide d'une série de balayages parallèles longitudinaux, de part et d'autre du cordon.

Le procédé selon l'invention qui vient d'être décrit permet donc, par la mise en oeuvre de la méthode magnétoélastique, d'obtenir de manière fiable et précise des informations relatives à des paramètres géométriques ou dimensionnels des cordons de soudure qui ne pouvaient pas être obtenues de manière simple et économique avec les procédés ou dispositifs selon l'état de la technique.

## Revendications

1. Procédé de contrôle non destructif d'un cordon de soudure (14) au moyen d'une sonde (18) appartenant à une instrumentation (20) mettant en oeuvre l'effet Barkhausen, ledit procédé visant à déterminer certains paramètres géométriques et/ou dimensionnels dudit cordon de soudure, tels notamment que la position (d) du cordon de soudure (14) par rapport au plan de joint théorique de soudage (PJT) ou la constance de la profondeur de pénétration (p) du cordon de soudure,
caractérisé en ce qu'on fait effectuer à ladite sonde (18) un balayage transversal d'au moins une portion dudit cordon de soudure (14), la course de balayage s'étendant successivement le long d'une portion de métal de base (MB), de la première zone affectée thermiquement (ZAT1), de la zone de fusion (ZF), de la seconde zone affectée thermiquement (ZAT2), puis d'une portion de métal de base (MB), en ce qu'on détermine les deux valeurs maximales consécutives (Maxl, Max2) du niveau de bruit Barkhausen correspondant sensiblement aux deux zones affectées thermiquement (ZAT1, ZAT2), puis en ce qu'on détermine la valeur minimale (Min) par laquelle passe le niveau de bruit entre ces deux valeurs maximales (Max1, Max2), cette valeur minimale correspondant sensiblement au positionnement de la sonde (18) au droit de l'axe médian (AM) du cordon de soudure (14).

2. Procédé de contrôle non destructif selon la revendication 1,
caractérisé en ce qu'il consiste à répéter plusieurs fois ledit balayage transversal en différentes positions (P1, P2, P3) le long du cordon de soudure (14).

3. Procédé de contrôle non destructif selon l'une quelconque des revendications 1 ou 2,
caractérisé en ce qu'on réalise de plus au moins un balayage longitudinal du cordon de soudure parallèlement à l'axe médian du cordon de soudure.

4. Procédé selon la revendication 3,
caractérisé en ce qu'on effectue ledit balayage longitudinal sensiblement au droit du plan de joint théorique de soudage, puis on déduit de l'analyse des variations de bruit Barkhausen une variation de la profondeur de pénétration (p) du cordon de soudure, la valeur du niveau de bruit Barkhausen variant en fonction de la valeur de la profondeur de pénétration.

5. Procédé selon l'une des revendications 3 ou 4,
caractérisé en ce qu'on effectue successivement une série de balayages longitudinaux selon des lignes parallèles, on calcule la moyenne du niveau de bruit enregistré au cours de chacun des balayages, on détermine les deux valeurs maximales de ces moyennes et la valeur minimale de la moyenne correspondant à une ligne de balayage située entre les deux lignes auxquelles correspondent les deux valeurs maximales, la ligne associée à ladite valeur minimale correspondant sensiblement à l'axe médian du cordon de soudure.

## Patentansprüche

1. Verfahren zur zerstörungsfreien Prüfung einer Lötnaht (14) mit Hilfe einer Sonde (18), die zu einer Vorrichtuung (20) gehört, durch die der Barkhausen-Effekt genutzt wird, wobei das Verfahren dazu dient, bestimmte geometrische Parameter und/oder Abmessungen der Lötnaht zu bestimmen, wie vor allem die Lage (d) der Lötnaht (14) gegenüber der theoretischen Lötverbindungsebene (PJT) oder die Konstanz der Einbrandtiefe (p) der Lötnaht,
dadurch gekennzeichnet, daß die Sonde (18) eine Querabtastung mindestens eines Teils der Lötnaht (14) durchführt, wobei der Abtastweg nacheinander längs eines Abschnitts des Grundmetalls (MB), der ersten thermisch beanspruchten Zone (ZAT1), der Schmelzzone (ZF), der zweiten thermisch beanspruchten Zone (ZAT2) und eines Abschnitts des Grundmetalls (MB) verläuft, dadurch, daß die beiden aufeinanderfolgenden Maximalwerte (Max1, Max2) des Barkhausen-Geräuschpegels, die etwa den beiden thermisch beanspruchten Zonen (ZAT1, ZAT2) entsprechen, bestimmt werden und dadurch, daß der Minimalwert (Min) bestimmt wird, durch den der Geräuschpegel zwischen diesen beiden Maximalwerten (Max1, Max2) verläuft, wobei dieser Minimalwert etwa der Positionierung der Sonde (18) rechtwinklig zur Mittelachse (AM) der Lötnaht (14) entspricht.

2. Verfahren zur zerstörungsfreien Prüfung nach Anspruch 1,
dadurch gekennzeichnet, daß die Querabtastung an verschiedenen Stellen (P1, P2, P3) längs der Lötnaht (14) mehrmals wiederholt wird.

3. Verfahren zur zerstörungsfreien Prüfung nach einem der Ansprüche 1 oder 2,
dadurch gekennzeichnet, daß zusätzlich mindestens eine Längsabtastung der Lötnaht parallel zur Mittelachse der Lötnaht erfolgt.

4. Verfahren nach Anspruch 3,
dadurch gekennzeichnet, daß die Längsabtastung etwa rechtwinklig zur theoretischen Lötverbindungsebene erfolgt, dann aus der Analyse der Änderungen des Barkhausen-Geräuschs eine Änderung der Einbrandtiefe (p) der Lötnaht abgeleitet wird, wobei sich der Wert des Barkhausen-Geräuschpegels in Abhängigkeit vom Wert der Einbrandtiefe ändert.

5. Verfahren nach einem der Ansprüche 3 oder 4,
dadurch gekennzeichnet, daß nacheinander eine Reihe von Längsabtastungen entsprechend parallelen Linien durchgeführt, das Mittel des bei jeder Abtastung aufgezeichneten Geräuschpegels berechnet und die beiden Maximalwerte dieser Mittel und der Minimalwert des Mittels, der einer Abtastlinie zwischen den beiden Linien der beiden Maximalwerte entspricht, bestimmt werden, wobei die Linie für den Minimalwert etwa der Mittelachse der Lötnaht entspricht.

## Claims

1. Procedure for the non-destructive testing of a weld bead (14) by means of a probe (18) forming part of an instrumentation arrangement (20) using the Barkhausen effect, the said procedure being intended to determine certain geometrical and/or dimensional parameters of the said weld bead, such as in particular the position (d) of the weld bead (14) with respect to the theoretical joint plane (PJT) of the welding or the constancy of the penetration depth (p) of the weld bead, characterized in that the said probe (18) is made to perform a transverse scan of at least one portion of the said weld bead (14), the scan travel extending in succession along a portion of basis metal (MB), the first heat-affected zone (ZAT1), the fusion zone (ZF), the second heat-affected zone (ZAT2) and then a portion of basis metal (MB), and in that the two consecutive maxima (Max1, Max2) in the level of Barkhausen noise corresponding substantially to the two heat-affected zones (ZAT1, ZAT2) are determined and then in that the minimum (Min) through which the noise level passes between these two maxima (Max1, Max2) is determined, this minimum corresponding substantially to positioning the probe (18) in line with the mid-axis (AM) of the weld bead (14).

2. Non-destructive testing procedure according to Claim 1, characterized in that it consists in repeating the said transverse scan several times at different positions (P1, P2, P3) along the weld bead (14).

3. Non-destructive testing procedure according to either of Claims 1 and 2, characterized in that, in addition, at least one longitudinal scan of the weld bead parallel to the mid-axis of the weld bead is carried out.

4. Procedure according to Claim 3, characterized in that the said longitudinal scan is performed substantially in line with the theoretical joint plane of the welding and then, by analysing the variation in the level of Barkhausen noise, a variation in the penetration depth (p) of the weld bead is deduced, the level of Barkhausen noise varying as a function of the penetration depth.

5. Procedure according to either of Claims 3 and 4, characterized in that a series of longitudinal scans is performed along parallel lines, the average of the level of noise recorded during each of the scans is calculated, the two maxima in these averages and the minimum in the average corresponding to a scan line lying between the two lines to which the two maxima correspond are determined, the line associated with the said minimum corresponding substantially to the mid-axis of the weld bead.
